# EUROPEAN PATENT SPECIFICATION

(11) **EP 2 797 285 B1**
(45) Date of publication and mention of the grant of the patent: **28.09.2016**
(21) Application number: 14165530.8
(22) Date of filing: 23.04.2014
(51) Int. Cl.: H04L 29/06

(54) **METHOD AND APPARATUS FOR NETWORK COMMUNICATION**
VERFAHREN UND VORRICHTUNG FÜR NETZKOMMUNIKATION
PROCÉDÉ ET APPAREIL DE COMMUNICATION DE RÉSEAU

(30) Priority: 25.04.2013 GB 201307518; 27.06.2013 GB 201311579
(43) Date of publication of application: 29.10.2014
(73) Proprietor: Vodafone IP Licensing Limited, Newbury, Berkshire RG14 2FN (GB)
(72) Inventor: Irwin, James, London, W2 6BY (GB); Carter, Phillip, London, W2 6BY (GB)
(74) Representative: Boult Wade Tennant

(56) References cited:
- EP-A2- 2 509 278
- US-A1- 2012 096 080

## Description

### Technical field

The present disclosure relates to a method and apparatus for network communication.

### Background

IP Multimedia Subsystem (IMS) networks are becoming more commonplace in the market with increased demand for mobile and fixed multimedia services. IMS networks are implemented on a 3GPP standardized implementation of Session Initiation Protocol (SIP), and run over standard Internet Protocol (IP) networks, but existing phone systems (both packet switched and circuit switched) are supported. IMS networks merge the Internet with mobile telephony; they use mobile technologies to provide ubiquitous access and Internet technologies to provide appealing services.

A service deployed over IMS network is Rich Communication Suit (RCS), which is a service upgrade that marks the transition of messaging and voice capabilities from circuit switched technology to all-IP technology. RCS provides a framework for discoverable and interoperable advanced communication services and detailed specifications for a basic set of advanced communication services.

Some of the main features of RCS are:
- Enhanced Phonebook with service capabilities
- Enhanced Messaging, since RCS enables a large variety of message options including chat and messaging history and file transfer
- Enriched calling, where users may share contents during a voice call.

For RCS, there may be a SIP server network element, for example an IMS core system, which enables peer-to-peer communication between RCS clients. Other network nodes can be deployed by the Service Provider to provide additional parts of the RCS feature set. For example, the AutoConfiguration Server (ACS), which is responsible for both the client configuration and the network provisioning. The client configuration may be based, for example, on an http or https session or both. Said https session includes the configuration xml, with all of the relevant information that may be needed for registering the user (such as IPs or urls, connection parameters and protocols, authorization user, password, etc) and service configuration parameters.

Early stages of RCS deployments have typically had very small "Active/Registered" (A/R) user ratios and, until sufficient penetration of RCS services is achieved, the A/R ratio is likely to remain at very low levels.

On the one hand, in order to increase the RCS penetration, networks need to be dimensioned according to an expected number of registered users, but on the other hand the small ratio of active/registered users means that the networks are underused. Every user registered in an IMS network incurs a licence fee to be paid by telco companies, as well as for active/registered user capacity. Therefore, a high number of non-active users registered in a network results in significant costs when actually the users are not using the network at all. Furthermore, the existence of a large number of registered, non-active users needlessly increases the signalling overheads in the IMS network.

EP 2509278 A2 describes a system and method for Session Initiation Protocol (SIP) user agent identification and efficient binding. In accordance with one example embodiment, there is provided a method for use on a Session Initiation Protocol (SIP) registration server for registering user agents, comprising: receiving a REGISTER message which includes a binding key; determining whether a prior binding associated with the binding key exists in a registration repository; and creating a new binding associated with the binding key and adding the new binding to the registration repository when no prior binding associated with the binding key exists in the registration repository.

US 2012/0096080 A1 describes a system, apparatus, and method for controlling the operation of a service in a client device. The invention uses an existing protocol which is used for communications between an application resident in the device and a remote server to convey information about the service to the application. The information may be relevant to a service specific function, such as configuration or provisioning, or an activation or deactivation instruction, for example. The application receives the service related information, processes the information and then provides the information to the service via a notification channel. The service related information may be incorporated into a message sent from the remote server to the client device by using an element of the protocol, for example, by appending a text string to a header.

### Summary

In a first aspect of the present disclosure, there is provided a network server defined in claim 1.
In a second aspect of the present disclosure, there is provided a network server defined in claim 15.
In a third aspect of the present disclosure, there is provided a method of establishing a bi-directional communications channel between a first terminal and a network server, as defined in claim 16.
In a fourth aspect of the present disclosure, there is provided a method of establishing a bi-directional communications channel between a first terminal and a network server, as defined in claim 17.

Further embodiments of the invention are defined by the dependent claims.

### Brief description of the drawings

A method and apparatus in accordance with the present disclosure is described, by way of example only, with reference to the following drawings, in which:
Figure 1 shows a block diagram of a cellular radio network;
Figure 2 shows a data flow of a first method for establishing a bi-directional communications channel between a first terminal and a network server in the cellular radio network of Figure 1; and
Figure 3 shows a data flow of a second method for establishing a bi-directional communications channel between a first terminal and a network server in the cellular radio network of Figure 1.

### Detailed description

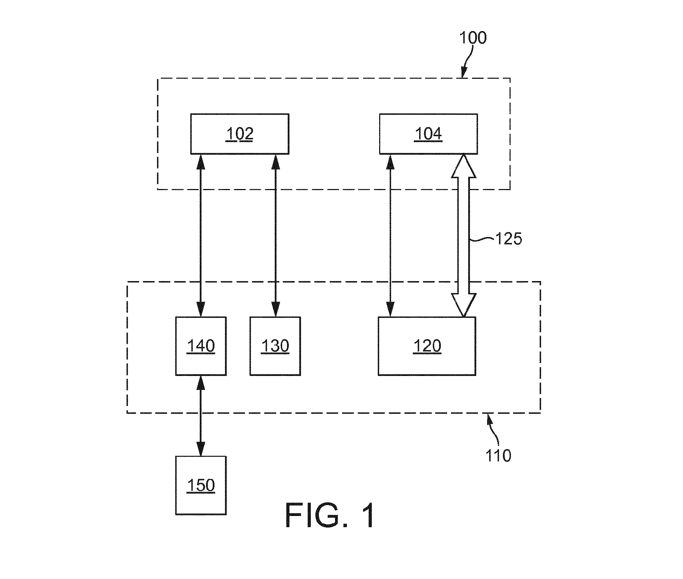

Figure 1 shows a block diagram of a cellular radio network comprising a first terminal 100, for example a mobile terminal, which comprises a service client 102, for example a communications client, such as an RCS client, and a connection management client 104. The service client 102 shall be referred to from hereon as an RCS client 102, although it will be understood that the service client 102 may operate in respect of any services.

The RCS client 102 and connection management client 104 may be deployed as separate applications, or the connection management client 104 may be an integrated component of the RCS client 102. For example, some operating systems may not support a separate deployment model due to platform specific constraints. The figures depict the RCS client 102 and the connection management client 104 as separate applications, although the functionality and operation of the RCS client 102 and the connection management client 104 will be the same when they are integrated.

The cellular radio network further comprises a network server 110, which comprises a network connection manager 120 and an autoconfiguration server 130, such as an RCS autoconfiguration server (RCS-ACS). The autoconfiguration server 130 shall be referred to from hereon as an RCS-ACS, although it will be understood that the services autoconifguration server 130 may operate in respect of any services.

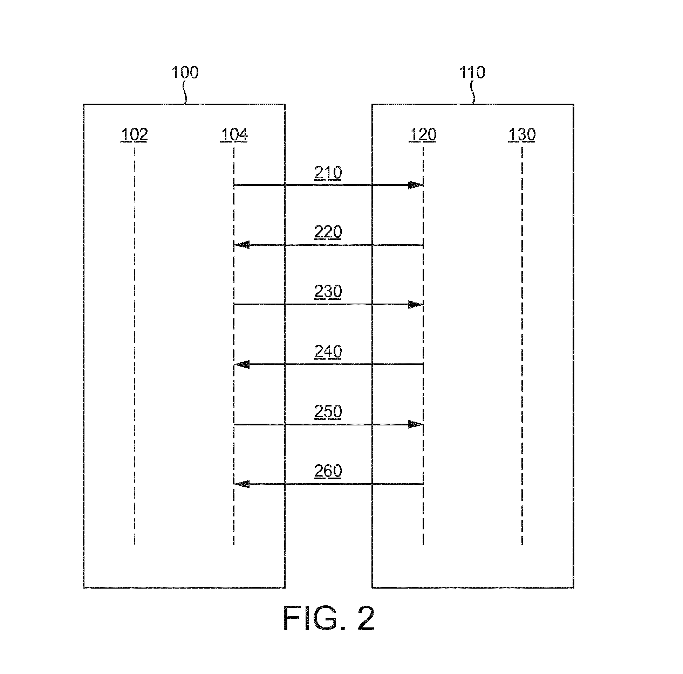

Figure 2 shows a data flow diagram for establishing a bi-directional communications channel 125, for example a TCP-IP socket such as a websocket connection, between the first terminal 100 and the network server 110 in accordance with a first aspect of the present disclosure. The bi-directional communications channel 125 shall be referred to from hereon as a websocket, although it will be understood that any form of bi-directional communications channel may be used.

The network connection manager 120 must first provision the connection management client 104 so that the websocket 125 between the network connection manager 120 and the connection management client 104 can be established.

The connection management client 104 transmits a connection management client identification in data transmission 210 to the network connection manager 120 using packet switched (PS) bearers. Any suitable protocol may be used for the transmission, such as http or https. Using PS bearers verifies the first terminal 100 to the network, so the network gateway through which the data transmission 210 passes may apply http header enrichment to add a user identifier. The user identifier may be a mobile subscriber integrated services digital network number (MSISDN), or where exposing the MSISDN is not appropriate or desired, it may be a reference number.

Having received the client identification, the network connection manager 120 will associate the connection management client 104 with the user identified by the user identifier and store the association. Association at the network connection manager 120 between the user and the connection management client 104 enables the network connection manager 120 to use the correct connection management client 104 for a particular user in the future.

Having performed the association, the network connection manager 120 generates an association identifier, for example a cookie or token, and transmits the association identifier to the connection management client 104 in data transmission 220. The association identifier may be used by the connection management client 104 in the future when it needs to identify to the network connection manager 120 a particular association, such that future re-association of the connection management client 104 and the user does not need to take place.

To complete the provisioning process, the connection management client 104 should obtain a provisioning document from the network connection manager 120. The provisioning document comprises a set of connection management specific parameters, including a credential that the connection management client 104 may use to authenticate itself to the network connection manager 120 during the establishment of the websocket connection 125. The provisioning document may further comprise other parameters, for example the period of time after the most recent issuance or receipt of SIP messages at the RCS client 102 that the RCS client 102 should de-register from a service server 140 on the network server 110.

In order to obtain the provisioning document, the connection management client 104 may transmit the association identifier to the network connection manager 120 in data transmission 230. The association identifier enables the network connection manager 120 to retrieve the relevant user identifier so that the correct information may be included in the provisioning document that is sent to the connection management client 104 in data transmission 240.

The association identifier may most preferably be transmitted to the network connection manager 120 securely using, for example, https. Transmitting the association identifier securely may reduce the chances of a 3^{rd} party obtaining the identifier which would enable the 3^{rd} party to obtain the provisioning document intended only for the first terminal 100 and then imitate the first terminal 100 in the future.

By using the association identifier to obtain the provisioning document, if the connection management client 104 needs to re-establish the websocket 125, for example because a previous websocket has been torn-down, or obtain an updated set of connection management specific parameters, re-association at the network connection manager 120 between the user and the connection management client 104 will not need to take place.

Having received the provisioning document, the connection management client 104 then transmits a websocket establishment request 250 comprising the credential to the network connection manager 120. The network connection manager 120 may then return a connection response 260 and the websocket 125 is thereby established.

The establishment of the websocket 125 between the connection management client 104 and the network connection manager 120 means that the RCS client 102 may remain unregistered with a service server 140, for example an SIP server, such as an IMS server, until such time as an RCS service is required by the first terminal 100. The service server 140 shall be referred to from hereon as the IMS server, although it will be understood that the service server 140 may operate in respect of any services.

As explained in more detail below, if a second terminal 150 attempts to initiate an RCS service with the first terminal 100, for example a video call, the network connection manager 120 may send a message via the websocket 125 to the connection management client 104, which will result in the connection management client 104 instructing the RCS client 102 to register with an IMS server 140 so that the second terminal 150 may connect with the first terminal 100. Likewise, if an operator of the first terminal requests an RCS service, the RCS client 102 may then register with the IMS server 140, so that the requested RCS service may be used.

After registration with the IMS server 140, the RCS client 102 may de-register after a period of inactivity, for example after the expiry of a period of time with no transmission or receipt of SIP messages.

By registering users with the IMS server 140 in this way, the first terminal 100 may be registered with the IMS server 140 only when active so that the real-time always on connectivity management requirements of RCS services are offloaded to the connection management client 104 and the network connection manager 120. Thus, the Active/Registered (A/R) user ratio is reduced, which in turn reduces the licence fees payable in respect of users who are registered to the IMS network but not actually using the network at all. Furthermore, additional signalling overheads in the IMS network caused by registered, non-active users will also be reduced.

The network connection manager 120 may be implemented in a separate cloud based architecture using commodity hardware and highly scalable server and database technologies. Therefore, whilst the network connection manager 120 will still need to scale in-line with the number of registered users, the costs of this are relatively low due to the use of commodity hardware and highly scalable low cost server technology.

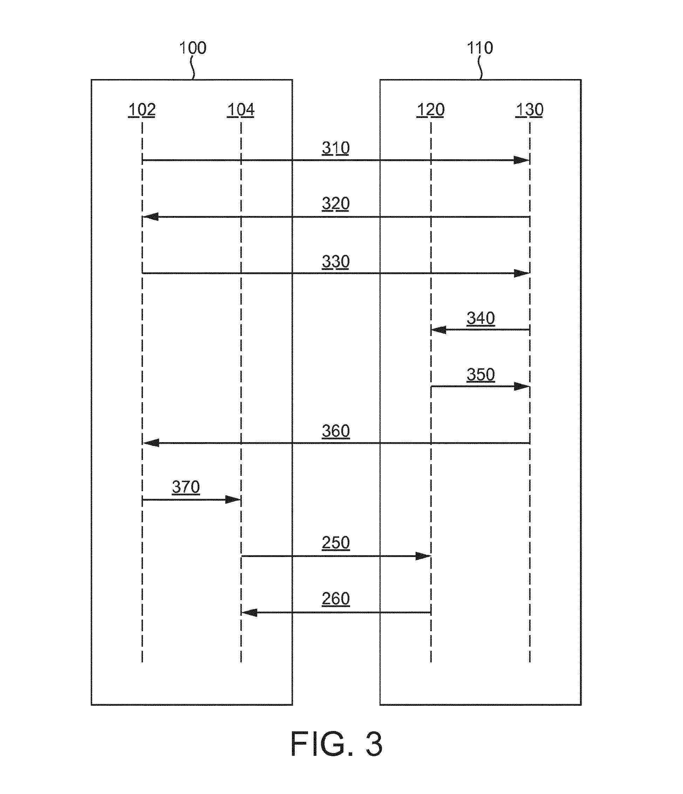

Figure 3 shows a data flow diagram for establishing the websocket connection 125 between the first terminal 100 and the network server 110 in accordance with a second aspect of the present disclosure. In the second aspect, provisioning of the connection management client 104 at the network connection manager 120 is carried out between the RCS client 102 and the RCS-ACS 130 using a modification of the processes and technologies defined by RCS/RCS-e for the provisioning of the RCS client 102 with the RCS-ACS 130. This avoids the need for a dedicated provisioning and verification process between the connection management client 104 and the network connection manager 120.

Data transfers 310, 320, 330 and 360 form part of the RCS/RCS-e provisioning process. In data transfer 310, the RCS client 102 transmits a request for provisioning at the RCS-ACS 130 using PS bearers. As explained above, the network gateway through which the data transmission 310 passes may apply http header enrichment to add a user identifier. This enables the RCS-ACS 130 to associate the RCS client 102 with the identified user and store the association. An association identifier, for example a cookie or a token is generated and returned to the RCS client 102 in data transfer 320.

In order then to complete the RCS provisioning and obtain an RCS provisioning document from the RCS-ACS 130, the association identifier is transmitted to the RCS-ACS 130 in data transfer 330. However, the RCS/RCS-e provisioning process is modified such that data transfer 330 further includes a connection management client identification, so that provisioning of the connection management client 104 with the network connection manager 120 may be carried out.

The RCS-ACS 130 uses the association identifier to retrieve the user identifier, which it then uses to instruct an association at the network connection manager 120 between the connection management client 104 and the user. The association is instructed in data transfer 340, which may take place using a REST based API exposed by the network connection manager 120. Having received this instruction, the network connection manager 120 associates the connection management client 104 with the user and returns connection management provisioning information, which comprises the credential identified earlier, to the RCS-ACS 130 in data transmission 350. Therefore, when the RCS-ACS 130 transmits the RCS provisioning document to the RCS client 102 in data transfer 360 as part of the normal RCS/RCS-e provisioning process, the RCS provisioning document may be modified also to include the connection management provisioning information.

Having completed the provisioning process, the RCS client 102 will then send the connection management provisioning information to the connection management client 104, for example via a secure platform specific mechanism, in data transfer 370, after which the connection management client 104 may establish the websocket 125 using data transfers 250 and 260, as explained in respect of the first aspect above.

During the provisioning process, the RCS client 102 may also transmit to the RCS-ACS 130, for example at the same time as transmitting the connection management client identifier, a connection management client version to indicate which connection management client is available. If no connection management client is available or installed, this may be indicated by setting the connection management client version to 0. The RCS-ACS 130 may then use the connection management client version to determine whether or not the connection management client 104 should be used.

If the connection management client 104 should be used, the RCS-ACS may instruct association of the connection management client 104 and the user at network connection manager 120 as explained above. When transmitting the modified RCS provisioning document to the RCS client 102, the RCS-ACS 130 may further include in the document a flag to indicate to the RCS client 102 that the connection management client 104 should be used and that the connection management provisioning information should therefore be passed on to the connection management client 104 for establishment of the websocket 125.

If the RCS-ACS 130 determines that the connection management client 104 should not be used, the RCS-ACS 130 may simply complete RCS provisioning as normal without carrying out any of the above described steps in respect of connection management provisioning.

In both of the above described aspects, in order to support multiple devices there is a 1:N relationship between the user identifier, for example the MSISDN, and connection management clients (and their associated credentials). Thus, where a particular user has multiple terminals, when the network connection manager 120 sends a notification message to the particular user, the notification message is sent to all of the connection management clients 104 associated with that user. Furthermore, there is a 1:1 relationship between the SIP-instance and connection management client. Thus, it is also possible to address a particular connection management client by using the SIP-instance.
When a second terminal 150 wishes to connect with the first terminal 100, capability discovery may first be carried out to determine if the RCS client 102 can support the service that the second terminal 150 wishes to initiate with the first terminal 100. To this end, a SIP OPTIONS request may be transmitted from the second terminal 150 to the first terminal 100 via the IMS server 140. However, because the RCS client 102 uses the connection management client 104, the RCS client 102 will spend most of its time unregistered with the IMS server 140.

If the RCS client 102 were itself to provide a response to the SIP OPTIONS request from the second terminal 150, the network connection manager 120 would first need to use the websocket 125 to prompt the network connection client 104 into triggering the RCS client 102 to register. However, this may be a time consuming process and since SIP OPTIONS are part of the capability discovery mechanism within the RCS system, a fast processing time is important in order to provide a responsive end user experience.

In order to deal with a SIP OPTIONS request issued by the second terminal 150 for the first terminal 100, an IMS options application server (AS) may be provided in the network server. When the IMS server 140 receives a SIP OPTIONS request for an unregistered user, it may be set up to forward the SIP OPTIONS request to the IMS options AS, which may respond on behalf of the unregistered user.

In response, the IMS options AS may return to the IMS sever 140 an indication of whether or not the first user is an RCS user but is currently unregistered and also the RCS features tags for each of the RCS services that the IMS options AS has recorded the user as being signed up for.

Whilst this technique may enable a quick response to SIP OPTIONS requests, it does not make use of the dynamic capability discovery feature of RCS, which can take into account the first terminal's current context, for example the RCS service that the first terminal 100 can currently support, perhaps because of changes in access technology (i.e. 2G, 3G, 4G, WiFi) currently available to the first terminal 100. Thus, only a static capability discovery process is supported.

An alternative technique for dealing with SIP OPTIONS requests may be to leverage the websocket 125 to transport or tunnel the SIP OPTIONS request to the RCS client 102. This requires the RCS client 102 to be running in a suspended or background state so that it may respond to requests without introducing additional latency due to the execution of tasks or processes that would normally occur at application start up.

In this technique, a SIP OPTIONS request for an unregistered user may again be forwarded by the IMS server 140 to the SIP options AS. However, rather than responding on behalf of the unregistered user, the IMS options AS may use an API exposed by the network connection manager 120 to encapsulate and send the SIP OPTIONS request to the RCS client 102 via the websocket 125. The RCS client 102 may then generate its response and send it back to the network connection manager 120 via the websocket 125, after which the network connection manager 120 may return the result to the SIP Options AS so it can send the response back to the originator of the SIP OPTIONS request. In this way, dynamic discovery of RCS services currently supported by the RCS client 102 may be determined whilst still achieving a fast processing time in order to provide a responsive end user experience.

A further alternative technique for achieving dynamic discovery is for the network connection manager 120 itself to deal with SIP OPTIONS requests for the unregistered first terminal 100. When establishing the websocket 125, the connection management client 104 may transmit further information in data transfer 250 in addition to the credential used to authenticate the connection management client 104 to the network connection manager 120. The further information may comprise information relating to the access technology currently supported by the RCS client 102 (for example 2G, 3G, 4G, WiFi). If the access technology changes, the connection management client 104 can re-establish a websocket connection 125 via the new access technology to reflect the change so that the network connection manager 120 is also up-to-date with the current ability of the RCS client 102 to support different RCS services.

In addition to that, the further information may also comprise details relating to the access bearer (for example the MCC and MNC, where a PS bearer is being used), which may also be used by the network connection manager 120 to determine the current ability of the RCS client 102 to support different RCS services, for example as a result of roaming between different cells.

Thus, when a SIP OPTIONS request for an unregistered first terminal is forwarded by the IMS server 140 to the IMS options AS, the IMS options AS may infer the RCS services that could currently be supported by the RCS client 102 based on the RCS client 102 access information it can obtain from the network connection manager 120 e.g. the current access technology supported by the RCS client 102. The IMS options AS can then forward an indication of the RCS services that could currently be supported by the RCS client 102 to the originator of the SIP OPTIONS request via the IMS server 140. Thus, the network connection manager 120 is able to facilitate on behalf of unregistered users, within a fast processing time, a meaningful, dynamic response to SIP OPTIONS requests.

In-call capability discovery may also be executed where, at the time of establishing a call between the second terminal 150 and the first terminal 100, the RCS capability of the first terminal 100 is discovered. Using any one of the capability discovery techniques described above, at the time of establishing the call, RCS tags for in-call capabilities supported by the RCS client 102 may be transmitted to the second terminal 150. By doing so, the second terminal 150 may light up or grey out accordingly any RCS features, for example video or image sharing, that may utilised during the call.

In order for the second terminal 150 to establish an RCS based session, for example VoIP, with the first terminal 100 when the RCS client 102 is initially unregistered, the second terminal 150 must transmit a SIP INVITE for the first terminal 100 to the IMS server 140. The IMS server 140 may be set up to forward all SIP INVITEs that are addressed to non-registered users to a connection management application server (CM-AS).

Once the CM-AS has received a SIP INVITE, the CM-AS may trigger the RCS client 102 to register, for example by sending an instruction to register to the connection management client 104 via the websocket 125 using a REST based API exposed by the network connection manager 120. Upon receiving the instruction, the network connection client 104 may then instruct the RCS client 102 to register.

The CM-AS may receive a response indicating whether or not the instruction was successfully delivered to the connection management client 104. For example, if the connection management client 104 is off-line, CM-AS will receive an appropriate SIP response, such as 480 Temporarily Unavailable, but if the instruction was successfully delivered, the CM-AS will receive a notification of success.

If the instruction was successfully delivered and the RCS client 102 is able to register, the RCS client 102 will send a SIP REGISTER message to the IMS server 140 in order to register with the IMS server 140. The CM-AS may subscribe to registration state changes of the RCS client 102 and as such may receive a notification (e.g. SIP NOTIFY) when the RCS client 102 registers. After receiving a notification of registration, the CM-AS may then forward the SIP INVITE to RCS client 102 for processing as normal, after which the second terminal 150 and the first terminal 100 will be connected and CM-AS can be excluded from the signalling path.

If the CM-AS does not receive a notification that the RCS client 102 has registered within a configurable period of time e.g. 60secs, the CM-AS may send a 408 Timeout message to the IMS server 140 for forwarding on to the second terminal 150. Thus, the second terminal 150 will be notified that connection with the first terminal 100 has not been successful. In a case where the first terminal 100 is connected to the network using suitable access technologies/bearers and yet the RCS client 102 fails to register, the connection management client 104 and/or the network connection manager 120 may include additional logic to trigger a further registration attempt, or even a re-provisioning of the RCS client 102 at the RCS-ACS 130.

Once a session between the first terminal 100 and the second terminal 150 has ended, the RCS client 102 may stay connected for a configurable period of time and then de-register.

The functionality of the CM-AS can be integrated with any existing Application Servers in the network server 110 that are deployed to handle multi-device scenarios. However, it is also possible to maintain the separation of Application Servers and enhance the existing Application Server logic to interact with the network connection manager 120 and perform the functions of the CM-AS.

The use of a network connection manager 120 might increase call setup times due to the additional steps and signalling involved in registering the RCS client 102 (i.e. the above described communication between the second terminal 150, the IMS server 140, the CM-AS, the network connection manager 120, the connection management client 104 and the RCS client 102 in order to instruct and carry out RCS registration). It may be possible to minimise the impact of this increased setup time by making use of the SIP OPTIONS capability. SIP OPTIONS is usually triggered whenever an operator of the second terminal 150 selects an entry in their contacts list for the user of the first terminal 100. When the 'contact card' for the user of the first terminal 100 is selected on the second terminal 150, an RCS client in the second terminal 150 may send a SIP OPTIONS request in respect of the first terminal 100 to the IMS server 140. In addition to the capability discovery triggered by a SIP OPTIONS request in respect of the first terminal 100, which is detailed above, the SIP OPTIONS request in respect of the first terminal 100 could also be used to trigger a pre-emptive registration of the RCS client 102.

The selection of a 'contact card' for the user of the first terminal 100 by an operator of the second terminal 150 implies an intent to communicate with the first terminal 100. Therefore, after the IMS server 140 has forwarded the SIP OPTIONS request to the OPTIONS AS, for example in order to carry out the capability discovery process described earlier, regardless of the mechanism by which the capability discovery process is to be carried out, the OPTIONS AS may notify the network connection manager 120 that a SIP OPTIONS request in respect of the first terminal 100 has been received. The network connection manager 120 may be set up to be triggered by this notification to use the websocket 125 to send a notification to the connection management client 104 to instruct the RCS client 102 to register with the IMS server 140. In this way, RCS client 102 may be pre-emptively triggered to register with the IMS server 140 before the second terminal 150 sends a SIP INVITE (which may be triggered, for example, by selecting a 'video call' option in the 'contact card'), thereby reducing call connection time.

One potential downside of pre-registration is an increase in signalling in the IMS core and other related systems, which could expose a DoS threat where the systems could be overloaded via SIP OPTIONS flooding. One technique that may be used to overcome this issue is to consider the history of communications between the first 100 and second 150 terminals. From this history, the percentage of SIP OPTIONS requests that are then followed by a SIP INVITE may be determined, and pre-emptive registration triggered by a SIP OPTIONS request may only take place when the percentage is over a predetermined value. The percentage may be calculated from all historical SIP OPTIONS requests and SIP INVITEs issued by the second terminal 150 in respect of the first terminal 100, or it may be calculated from all SIP OPTIONS requests and SIP INVITEs issued by the second terminal 150 in respect of the first terminal 100 over a period of time, for example in the previous seven days.

When an operator of a terminal installs or uses for the first time an RCS client, the RCS client may try to establish which of the contacts in the terminal's address book are RCS enabled. In order to do so, the RCS client may carry out an initial capability discovery by sending SIP OPTIONS requests for each of the contacts in the address book and based on the response it can tell which contacts are RCS enabled and cache any returned capability indications.

It may be important when carrying out pre-registration to distinguish between SIP OPTIONS requests issued as part of an initial capability discovery and SIP OPTIONS requests issued when an operator of the terminal has selected a contact card. If no distinction is made, an initial capability discovery may result in the triggering of pre-registration of the RCS client of every contact in the address book, which may place a significant signalling load on the IMS core. For example, if the second terminal 150 carried out initial capability discovery, the RCS client 102 may be triggered to register with the IMS server 140, even though there is no clear suggestion that the second terminal 150 wishes to connect with the first terminal 100 in the near future.

In order to distinguish initial capability discovery from a capability discovery triggered by the selection of a contact card, a sliding window technique may be used. In this technique, the IMS server 140 may monitor the number of SIP OPTIONS requests issued by a particular terminal, for example the second terminal 150, in a period of time (a 'window'), for example in the last minute. If the number of SIP OPTIONS requests exceeds a threshold number during the period of time, it may be considered that initial capability discovery is taking place and pre-registration be disabled. Pre-registration may then only be allowed when the number of SIP OPTIONS request from the second terminal 150 falls bellow a threshold during the window period of time.

In addition, or alternatively, the total aggregated number of pre-emptive registrations that are triggered by SIP OPTIONS requests over a set period of time (a 'window') may be limited. This may allow signalling within the IMS core and other related system to be maintained within manageable bounds.

Such logic and rules may be contained in either the network connection manager 120 or the OPTIONS AS. For example, if they are contained in the OPTIONS AS, the OPTIONS AS may determine upon receipt of a SIP OPTIONS request whether or not it should proceed with triggering pre-emptive registration by notifying the network connection manager 120. If they are contained in the network connection manager 120, the OPTIONS AS may always notify the network connection manager 120, which may then decide whether or not to initiate pre-emptive registration.

The impact of the network connection manager 120 and the connection management client 104 on call setup times may be even further reduced by encapsulating the session description protocol (SDP) from a SIP INVITE and sending it to the RCS client 102 via the network connection manager 120, the websocket 125 and the connection management client 104. This may allow the RCS client 102 to pre-process the SDP and therefore pre-emptively prepare to establish the session and associated media. However, the SDP that ultimately arrives at the RCS client 102 via the SIP INVITE may be modified by intermediate proxies, so the RCS client 102 should use the encapsulated SDP only as an indication of what to expect.

There may be cases where the use of SIP OPTIONS to trigger pre-emptive registration may not be viable, or where the pre-emptive triggering service logic means that pre-emptively triggering registration is not possible/acceptable. In those instances, registration time may still be reduced by setting up the network connection manager 120 to trigger, upon receipt of a SIP OPTIONS request, a serving call session control function (S-CSCF) to pre-fetch authentication vectors from a home subscriber server (HSS). By doing so, if registration of the RCS client 102 with the IMS server 140 later takes place, the registration time should be reduced.

In some access networks, websocket connections may be torn down after a period of inactivity in order to allow for efficient use of limited resources. In order to overcome this issue and maintain the websocket 125, keep-alive message may be employed.

Transmitting keep-alive messages on the websocket 125 means that activity is taking place on the websocket 125. Therefore, provided at least one keep-alive message is transmitted on the websocket 125 within a tear-down timer period, the tear-down timer period will be re-started and the websocket 125 maintained.

In many instances, the keep-alive message can be generated by an application on the terminal. The application may go into a suspended state and request that the operating system (OS) takes responsibility for waking it at regular intervals in order to generate the keep-alive messages. However, in the interest of improving battery life, some OS enforce a minimum period between application wake-ups, which may represent a significant problem where the minimum period of greater than the tear-down timer period.

This problem may be overcome by taking advantage of the fact that the OS will always wake a suspended application when data is received on a socket, provided the application has delegated control of the socket to the OS before requesting to be suspended. Therefore, if keep-alive messages are generated on the server side, they may be issued with sufficient regularity to prevent tearing-down of the websocket 125.

A downside of using server side generated keep-alive messages is the potential to drive up processing demand on the server side due to the overhead of managing keep-alive messages. In order to minimise this downside, the server can, through minor adjustments of the keep-alive timers, attempt to achieve an even distribution or spread of keep-alive generation between different user terminals so as to minimise instantaneous server side load. A further downside is a negative impact on the battery life of the terminal. When a terminal receives a keep-alive message from a server, a 'ping', it must respond with another message, a 'pong'. The more 'pings' that are transmitted by the server, the more work the terminal must do in processing the 'pings' and responding with 'pongs', which will impact on battery life.

Because the network connection manager 120 can be implemented using commodity hardware and highly scalable server technologies, it supports horizontal scaling at a relatively low cost (as explained earlier), it is possible to establish multiple websockets 125 between the connection management client 104 and the network connection manager 120. By using multiple websockets, a longer keep-alive timer value may be tested on a secondary websocket whilst a safe, shorter keep-alive timer is used on a primary websocket. If the keep-alive timer of the second websocket proves to be viable, that timer may then be used for the primary websocket and a larger keep-alive timer value is then tested on the secondary websocket. This process may be repeated until the secondary websocket cannot achieve a safe improvement on the primary websocket keep-alive timer, or until the primary websocket keep-alive timer is sufficiently close to the maximum timeout period of the websocket. For example, the maximum timeout period may be the period during which re-registration of the websocket will always take place in any event, for example every 30 minutes, and a sufficiently close web-socket keep-alive timer value may be 70% of the maximum timeout period. Once it is determined that the primary websocket keep-alive timer is optimised, the secondary websocket may be torn-down so that keep-alive messages are generated and transmitted on only a single websocket 125 using an optimised keep-alive timer value.

In this way, battery life may be improved by decreasing the number of keep-alive messages that the terminal must deal with per unit time, whilst still ensuring that the websocket 125 is maintained.

However, every different access network may have a different tear-down timer period. Therefore, every time the first terminal 100 changes access network (for example, moving to a different cell, or to a different WiFi network etc), in order to ensure that websocket 125 is maintained, a very short safe keep-alive timer value will need to be used on the primary websocket, with progressively longer timers tested on the secondary websocket until an optimised keep-alive timer value is arrived at. This may be damaging to the battery life of the first terminal 100 and increase the data processing load placed on the network server, particularly when the first terminal 100 is moving rapidly between access networks.

In order to overcome this problem, when establishing the websocket 125, the connection management client 104 may transmit further information in data transfer 250 in addition to the credential used to authenticate the connection management client 104 to the network connection manager 120. The further information may comprise information relating to the access technology currently supported by the RCS client 102 (for example 2G, 3G, 4G, WiFi) and details relating to the access bearer (for example the MCC and MNC, where a PS bearer is being used, and a hashed SSID and nonce, where WiFi is being used). From this data, it can be determined exactly which access network the first terminal 100 is currently using, and a cached last valid optimised keep-alive timer value for that particular access network identified (if the first terminal 100 has used that access network in the past). Where there is a cached value, the initial keep-alive timer value used on the primary websocket may be that cached value, thus avoiding the need to start from a very short keep-alive timer value. Therefore, particularly when the first terminal 100 is located at or near places that the user regularly visits, for example home or work, or where the access network is provided by a network operator for which an optimised keep-alive timer value is cached, battery life may be improved by using cached keep-alive timer values when moving between access networks.

A number of modifications to the above described aspects of the present disclosure may be implemented.

For example, where access over a PS bearer is not available, during the provisioning processes described above, the network will not be able to verify the first terminal 100 by virtue of PS bearer communication from the first terminal 100. Furthermore, http header enrichment to add the user identifier, for example the MSISDN, at the network gateway will not be possible. Therefore, in addition to the provisioning steps, verification must also take place.

Verification may be achieved by transmitting, along with the connection management client identifier, the user identifier from the first terminal 100 to the network. The user identifier may be obtained either from the user entering it into the first terminal 100, or from memory in the first terminal 100.

At the time of associating the connection management client 104 with the user at the network connection manager 120 in the first aspect above, or associating the RCS client 102 with the user at the RCS-ACS 130 in the second aspect above, a verification code may be generated and transmitted to the first terminal 100 by SMS. Where SMS user data header (UDH) is supported, an SMS client on the first terminal 100 may pass the verification code to the connection management client 104 or the RCS client 102 so that verification may take place without user interaction. Where SMS UDH is not supported, the user may simply read the verification code of the received SMS message and enter it into the device 100, so that the connection management client 104 or the RCS client 102 may then complete verification. Once the verification code has been received by the network, the provisioning process may be completed.

Whilst the above aspects describe using the websocket 125 to activate an RCS client 102 to register with an IMS server 140, the RCS client 102 could be any sort of application, or may be a number of different applications, wherein the websocket 125 and connection management client may be used to activate that application(s) to perform an action, for example waking-up. The connection management client 104, the websocket 125 and network connection manager 120 may be used with multiple different applications by, for example, using different domains. The connection management client 104, the websocket 125 and network connection manager 120 may be defined in such a way as to provide a common abstraction, but the concept of different domains may also allow for domain specific extensions, whether that be in the first terminal 100 or the network server 110.

Some applications may have different priorities than others, therefore, messages sent to the network connection manager 120 for transmittal to an application may have an indicator of priority. If the message is marked as high priority, it may be sent on to the application immediately. However, if it is a low priority, it may be queued for processing at a later time, for example when server processing load falls below a specified threshold, or until the next keep-alive message is sent, or waiting for a predefined period of time to see if additional messages arrive before sending them together.

The network connection manager 120 may also support a mechanism to revoke or replace messages that have been submitted but not yet sent, by using, for example, a webhook like callback to notify the application/service that submitted the message when the message has been sent. This may be extended to notify the application/service just before sending a queued message so as to allow the application/service to cancel or replace the message if appropriate. Furthermore, the application/service may be able to specify a 'do not send before' period of time, or a period of time that the message should remain queued for.

In the above described second aspect of the provisioning process, where the network connection manager 120 associates the connection management client 104 with the user in a modification of the RCS/RCS-e provisioning process, rather than transmitting the connection management client version to the RCS-ACS 130 in data transmission 330, it may instead be transmitted in data transmission 310. Steps 340 and 350, associating at the network connection manager 120 the connection management client 104 with the user, may then take place before step 320, or still take place after step 330 as shown in Figure 3.

## Claims

1. A network server (110) comprising a network connection manager (120) and a SIP server (140), the network server being suitable for the establishment of a bi-directional communications channel (125) between the network server and a first terminal (100), the bi-directional communications channel being suitable for use by the network connection manager to activate a communications client (102) on the first terminal, the first terminal comprising a connection management client (104), wherein the network server is configured to:
associate at the network connection manager the connection management client with a registered network user;
transmit to the first terminal a provisioning document comprising a credential with which the connection management client may authenticate itself to the network connection manager; and
receive at the network connection manager the credential, which is transmitted by the connection management client, and establish the bi-directional communications channel between the connection management client and the network connection manager,
wherein the SIP server is configured to:
receive from a second terminal at least one of:
an invitation from a second terminal (150) to begin a SIP session with the first terminal; and/or
a first terminal capability request; and
if the communications client is not registered with the SIP server, notify the network connection manager of the invitation to begin a SIP session with the first terminal and/or the first terminal capability request; and wherein
the network connection manager is further configured to:
send a registration instruction via the bi-directional communications channel to the connection management client so that it can instruct the communications client to register with the SIP server.

2. The apparatus of claim 1, wherein the network server further comprises an autoconfiguration server (130), wherein the network server is further configured to:
receive at the autoconfiguration server a connection management client identification and a registered network user identification;
wherein the autoconfiguration server is configured to:
instruct the network connection manager to associate the connection management client with the registered network user;
receive the credential from the network connection manager; and
transmit to the application the provisioning document.

3. The apparatus of claim 1 or claim 2, wherein the network connection manager is further configured:
to store an association identifier that identifies the association between the connection management client and the registered network user; and
wherein the network server is further configured to:
transmit the association identifier to the first terminal; and
transmit the provisioning document to the first terminal after receipt of the association identifier from the first terminal.

4. The apparatus of claim 2 or claim 3, wherein the network server is further configured to receive at the autoconfiguration server an indication of the connection management client version so that the autoconfiguration server can determine whether the connection management client and network connection manager should be used before instructing the network connection manager to associate the connection management client with the registered network user.

5. The apparatus of any preceding claim, wherein the network server further comprises a capability server that is configured to store a record of services available to the first terminal, and wherein:
if the SIP server receives from the second terminal a first terminal capability request whilst the communications client is not registered with the SIP server, the SIP server is configured to forward the first terminal capability request to the capability server and the capability server is configured to return to the SIP server an indication of the service available to the first terminal; and
the SIP server is further configured to forward to the second terminal the indication of the service available to the first terminal.

6. The apparatus of any one of claims 1 to 4, wherein the network server further comprises a capability server, and wherein:
if the SIP server receives from the second terminal a first terminal capability request whilst the communications client is not registered with the SIP server, the SIP server is configured to forward the first terminal capability request to the capability server; and wherein
the capability server is configured to:
transport the first terminal capability request via the bi-directional communications channel to the communications client;
receive from the communications client via the bi-directional communications channel an indication of the SIP service that the first terminal supports; and
forward to the SIP server the indication of the SIP service that the first terminal supports, wherein the SIP server is further configured to forward the indication of the SIP service that the first terminal supports to the second terminal.

7. The apparatus of any one of claims 1 to 4, wherein the network server is further configured to receive at the network connection manager an indication of the access technology with which the first terminal is accessing the network, which is transmitted by the connection management client.

8. The apparatus of claim 7, wherein the SIP server is further configured to:
if the second terminal transmits a first terminal capability request to the SIP server, transmit to the second terminal an indication of the service that the first user supports based on the access technology with which the first terminal is accessing network, which is retrieved from the network connection manager.

9. The apparatus of any preceding claim, wherein the network server is further configured to:
record the number of first terminal capability requests transmitted by the second terminal that are followed by an invitation from the second terminal to begin a SIP session with the first terminal; and
send the registration instruction only when the percentage of first terminal capability requests that are followed by an invitation to begin a SIP session with the first terminal exceeds a threshold.

10. The apparatus of any preceding claim, wherein the network connection manager is further configured to limit the total aggregated number of registration instructions sent by the network connection manager over a period of time to a number below a threshold value.

11. The apparatus of any one of any preceding claim, wherein the network connection manager is further configured to transmit the registration instruction only when the number of capability requests transmitted by the second terminal within a time period is below a threshold value.

12. The apparatus of any preceding claim, wherein the network server is further configured to:
establish a plurality of bi-directional communications channels between the connection management client and the network connection manager;
transmit to the first terminal at a first interval a first periodic keep alive request for keeping alive a first bi-directional communications channel between the connection management client and the network connection manager; and
transmit to the first terminal at a second interval a second periodic keep alive request for keeping alive a second bi-directional communications channel between the connection management client and the network connection manager; wherein
the first interval is shorter than the second interval.

13. The apparatus of claim 12, wherein the network server is further configured to:
receive at the network connection manager an indication of access technology and an indication of access bearer, wherein the indication of access technology indicates the technology with which the first terminal is accessing the network and the indication of access bearer indicates the bearer with which the first terminal is accessing the network, and wherein:
the first interval is the last valid optimised bi-directional communications channel keep alive timer value for the access technology and access bearer.

14. The apparatus of any preceding claim, wherein the network server is further configured to:
transmit a first periodic keep alive request to the first terminal for keeping alive the bi-directional communications channel between the connection management client and the network connection manager;
wherein the first periodic keep alive request is transmitted at different times to transmission by the network server of a second periodic keep alive request for keeping alive a second bi-directional communications channel.

15. A network server (110) comprising a network connection manager (120), a connection management application server and a SIP server (140), the network server being suitable for the establishment of a bi-directional communications channel (125) between the network server and a first terminal (100), the bi-directional communications channel being suitable for use by the network connection manager to activate a communications client (102) on the first terminal, the first terminal comprising a connection management client (104), wherein the network server is configured to:
associate at the network connection manager the connection management client with a registered network user;
transmit to the first terminal a provisioning document comprising a credential with which the connection management client may authenticate itself to the network connection manager; and
receive at the network connection manager the credential, which is transmitted by the connection management client, and establish the bi-directional communications channel between the connection management client and the network connection manager, wherein
the SIP server is configured to:
receive from a second terminal an invitation to begin a SIP session with the first terminal; and
if the communications client is not registered with the SIP server, notify the connection management application server of the invitation to begin a SIP session with the first terminal; and wherein
the connection management application server is further configured to:
send a registration instruction via the bi-directional communications channel to the connection management client so that it can instruct the communications client to register with the SIP server.

16. A method of establishing a bi-directional communications channel (125) between a first terminal (100) and a network server (110), the first terminal comprising a connection management client, and the network server comprising a network connection manager (120) and a SIP server (140), the bi-directional communications channel being suitable for use by the network connection manager to activate an application on the first terminal, the method comprising the steps of:
associating at the network connection manager the connection management client with a registered network user;
transmitting to the first terminal a provisioning document comprising a credential with which the connection management client may authenticate itself to the network connection manager;
receiving at the network connection manager the credential, which is transmitted by the connection management client, and establishing the bi-directional communications channel between the connection management client and the network connection manager;
receiving at the SIP server
a first terminal capability request from the second terminal;
notifying the network connection manager of the first terminal capability request; and
sending a registration instruction via the bi-directional communications channel to the connection management client so that it can instruct the communications client to register with the SIP server.

17. A method of establishing a bi-directional communications channel (125) between a first terminal (100) and a network server (110), the first terminal comprising a connection management client, and the network server comprising a network connection manager (120), a connection management application server and a SIP server (140), the bi-directional communications channel being suitable for use by the network connection manager to activate an application on the first terminal, the method comprising the steps of:
associating at the network connection manager the connection management client with a registered network user;
transmitting to the first terminal a provisioning document comprising a credential with which the connection management client may authenticate itself to the network connection manager;
receiving at the network connection manager the credential, which is transmitted by the connection management client, and establishing the bi-directional communications channel between the connection management client and the network connection manager;
receiving at the SIP server an invitation from a second terminal (150) to begin a SIP session with the first terminal;
notifying the connection management application server of the invitation to begin a SIP session with the first terminal; and
sending a registration instruction via the bi-directional communications channel to the connection management client so that it can instruct the communications client to register with the SIP server.

## Patentansprüche

1. Netzwerkserver (110), der einen Netzwerkverbindungsmanager (120) und einen SIP-Server (140) umfasst, wobei der Netzwerkserver zum Einrichten eines bidirektionalen Kommunikationskanals (125) zwischen dem Netzwerkserver und einem ersten Terminal (100) geeignet ist, wobei der bidirektionale Kommunikationskanal zur Benutzung durch den Netzwerkverbindungsmanager geeignet ist, um einen Kommunikations-Client (102) auf dem ersten Terminal zu aktivieren, wobei der erste Terminal einen Verbindungsmanagement-Client (104) umfasst, wobei der Netzwerkserver konfiguriert ist zum:
Assoziieren, am Netzwerkverbindungsmanager, des Verbindungsmanagement-Client mit einem registrierten Netzwerkbenutzer;
Senden, zum ersten Terminal, eines Provisionierungsdokuments, das Anmeldedaten umfasst, mit denen sich der Verbindungsmanagement-Client selbst beim Netzwerkverbindungsmanager authentifizieren kann; und
Empfangen, am Netzwerkverbindungsmanager, der vom Verbindungsmanagement-Client gesendeten Anmeldedaten und Einrichten des bidirektionalen Kommunikationskanals zwischen dem Verbindungsmanagement-Client und dem Netzwerkverbindungsmanager,
wobei der SIP-Server konfiguriert ist zum:
Empfangen, von einem zweiten Terminal, von wenigstens einem aus:
einer Einladung von einem zweiten Terminal (150) zum Beginnen einer SIP-Sitzung mit dem ersten Terminal; und/oder
einer ersten Terminalfähigkeitsanforderung; und
Benachrichtigen, wenn der Kommunikations-Client nicht beim SIP-Server registriert ist, des Netzwerkverbindungsmanagers über die Einladung zum Beginnen einer SIP-Sitzung mit dem ersten Terminal und/oder der ersten Terminalfähigkeitsanforderung; und wobei:
der Netzwerkverbindungsmanager ferner konfiguriert ist zum:
Senden einer Registrierungsanweisung über den bidirektionalen Kommunikationskanal zu dem Verbindungsmanagement-Client, um den Kommunikations-Client zum Registrieren beim SIP-Server anzuweisen.

2. Vorrichtung nach Anspruch 1, wobei der Netzwerkserver ferner einen Autokonfigurationsserver (130) umfasst, wobei der Netzwerkserver ferner konfiguriert ist zum:
Empfangen, am Autokonfigurationsserver, einer Verbindungsmanagement-Client-Identifikation und einer Registuerter-Netzwerkbenutzer-Identifikation;
wobei der Autokonfigurationsserver konfiguriert ist zum:
Anweisen des Netzwerkverbindungsmanagers zum Assoziieren des Verbindungsmanagement-Client bei dem registrierten Netzwerkbenutzer;
Empfangen der Anmeldedaten vom Netzwerkverbindungsmanager; und
Senden des Provisionierungsdokuments zu der Anwendung.

3. Vorrichtung nach Anspruch 1 oder Anspruch 2, wobei der Netzwerkverbindungsmanager ferner konfiguriert ist zum:
Speichern eines Assoziationsidentifikators, der die Assoziation zwischen dem Verbindungsmanagement-Client und dem registrierten Netzwerkbenutzer identifiziert; und
wobei der Netzwerkserver ferner konfiguriert ist zum:
Senden des Assoziationsidentifikators zum ersten Terminal; und
Senden des Provisionierungsdokuments zum ersten Terminal nach dem Empfang des Assoziationsidentifikators vom ersten Terminal.

4. Vorrichtung nach Anspruch 2 oder Anspruch 3, wobei der Netzwerkserver ferner zum Empfangen, am Autokonfigurationsserver, einer Anzeige der Verbindungsmanagement-Client-Version konfiguriert ist, so dass der Autokonfigurationsserver bestimmen kann, ob der Verbindungsmanagement-Client und der Netzwerkverbindungsmanager benutzt werden sollen, vor dem Anweisen des Netzwerkverbindungsmanagers, den Verbindungsmanagement-Client mit dem registrierten Netzwerkbenutzer zu assoziierten.

5. Vorrichtung nach einem vorherigen Anspruch, wobei der Netzwerkserver ferner einen Fähigkeitsserver umfasst, der zum Speichern eines Datensatzes von dem ersten Terminal zur Verfügung stehenden Diensten konfiguriert ist, und wobei:
der SIP-Server, wenn er vom zweiten Terminal eine erste Terminalfähigkeitsanforderung empfängt, während der Kommunikations-Client nicht beim SIP-Server registriert ist, zum Weiterleiten der ersten Terminalfähigkeitsanforderung zum Fähigkeitsserver konfiguriert ist und der Fähigkeitsserver zum Zurücksenden einer Anzeige des dem ersten Terminal zur Verfügung stehenden Dienstes zum SIP-Server konfiguriert ist; und
der SIP-Server ferner zum Weiterleiten der Anzeige des dem ersten Terminal zur Verfügung stehenden Dienstes zu dem zweiten Terminal konfiguriert ist.

6. Vorrichtung nach einem der Ansprüche 1 bis 4, wobei der Netzwerkserver ferner einen Fähigkeitsserver umfasst, und wobei:
der SIP-Server, wenn er vom zweiten Terminal eine erste Terminalfähigkeitsanforderung empfängt, während der Kommunikations-Client nicht beim SIP-Server registriert ist, zum Weiterleiten der ersten Terminalfähigkeitsanforderung zum Fähigkeitsserver konfiguriert ist; und wobei
der Fähigkeitsserver konfiguriert ist zum:
Transportieren der ersten Terminalfähigkeitsanforderung über den bidirektionalen Kommunikationskanal zum Kommunikations-Client;
Empfangen, vom Kommunikations-Client über den bidirektioalen Kommunikationskanal, einer Anzeige des SIP-Service, den der erste Terminal unterstützt; und
Weiterleiten, zum SIP-Server, der Anzeige des SIP-Service, den der erste Terminal unterstützt, wobei der SIP-Server ferner zum Weiterleiten der Anzeige des SIP-Server, den der erste Terminal unterstützt, zum zweiten Terminal konfiguriert ist.

7. Vorrichtung nach einem der Ansprüche 1 bis 4, wobei der Netzwerkserver ferner zum Empfangen, am Netzwerkverbindungsmanager, einer Anzeige der Zugangstechnologie konfiguriert ist, mit der der erste Terminal auf das Netzwerk zugreift, die vom Verbindungsmanagement-Client gesendet wird.

8. Vorrichtung nach Anspruch 7, wobei der SIP-Server ferner konfiguriert ist zum:
Senden, wenn das zweite Terminal eine erste Terminalfähigkeitsanforderung zum SIP-Server sendet, einer Anzeige des Dienstes, den der erste Benutzer unterstützt, zum zweiten Terminal auf der Basis der Zugangstechnologie, mit der das erste Terminal auf das Netzwerk zugreift, die vom Netzwerkverbindungsmanager abgerufen wird.

9. Vorrichtung nach einem vorherigen Anspruch, wobei der Netzwerkserver ferner konfiguriert ist zum:
Aufzeichnen der Anzahl von vom zweiten Terminal gesendeten ersten Terminalfähigkeitsanforderungen, auf die eine Einladung vom zweiten Terminal zum Beginnen einer SIP-Sitzung mit dem ersten Terminal folgt; und
Senden der Registrierungsanweisung nur dann, wenn der Prozentanteil an ersten Terminalfähigkeitsanforderungen, auf die eine Einladung zum Beginnen einer SIP-Sitzung mit dem ersten Terminal folgt, einen Schwellenwert übersteigt.

10. Vorrichtung nach einem vorherigen Anspruch, wobei der Netzwerkverbindungsmanager ferner zum Begrenzen der aggregierten Gesamtzahl von Registrierungsanweisungen, die vom Netzwerkverbindungsmanager über eine Zeitperiode gesendet werden, auf eine Anzahl unterhalb eines Schwellenwerts konfiguriert ist.

11. Vorrichtung nach einem vorherigen Anspruch, wobei der Netzwerkverbindungsmanager ferner zum Senden der Registrierungsanweisung nur dann konfiguriert ist, wenn die Anzahl von Fähigkeitsanforderungen, die vom zweiten Terminal innerhalb einer Zeitperiode gesendet werden, unterhalb eines Schwellenwerts liegt.

12. Vorrichtung nach einem vorherigen Anspruch, wobei der Netzwerkserver ferner konfiguriert ist zum:
Einrichten mehrerer bidirektionaler Kommunikationskanäle zwischen dem Verbindungsmanagement-Client und dem Netzwerkverbindungsmanager;
Senden, zum ersten Terminal in einem ersten Intervall, einer ersten periodischen Keep-alive-Anforderung zum Lebenderhalten eines ersten bidirektionalen Kommunikationskanals zwischen dem Verbindungsmanagement-Client und dem Netzwerkverbindungsmanager; und
Senden, zum ersten Terminal in einem zweiten Intervall, einer zweiten periodischen Keep-alive-Anforderung zum Lebenderhalten eines zweiten bidirektionalen Kommunikationskanals zwischen dem Verbindungsmanagement-Client und dem Netzwerkverbindungsmanager; wobei
das erste Intervall kürzer ist als das zweite Intervall.

13. Vorrichtung nach Anspruch 12, wobei der Netzwerkserver ferner konfiguriert ist zum:
Empfangen, am Netzwerkverbindungsmanager, einer Anzeige der Zugangstechnologie oder einer Anzeige des Zugangsträgers, wobei die Anzeige der Zugangstechnologie die Technologie anzeigt, mit der das erste Terminal auf das Netzwerk zugreift, und die Anzeige des Zugangsträgers den Träger anzeigt, mit dem das erste Terminal auf das Netzwerk zugreift, und wobei:
das erste Intervall der letzte gültige optimierte Keep-alive-Timer-Wert des bidirektionalen Kommunikationskanals für die Zugangstechnologie und den Zugangsträger ist.

14. Vorrichtung nach einem vorherigen Anspruch, wobei der Netzwerkserver ferner konfiguriert ist zum:
Senden einer ersten periodischen Keep-alive-Anforderung zum ersten Terminal zum Lebenderhalten des bidirektionalen Kommunikationskanals zwischen dem Verbindungsmanagement-Client und dem Netzwerkverbindungsmanager;
wobei die erste periodische Keep-alive-Anforderung zu unterschiedlichen Zeiten zum Senden durch den Netzwerkserver einer zweiten periodischen Keep-alive-Anforderung zum Lebenderhalten eines zweiten bidirektionalen Kommunikationskanals gesendet wird.

15. Netzwerkserver (110), der Folgendes umfasst: einen Netzwerkverbindungsmanager (120), einen Verbindungsmanagement-Anwendungsserver und einen SIP-Server (140), wobei der Netzwerkserver zum Einrichten eines bidirektionalen Kommunikationskanals (125) zwischen dem Netzwerkserver und einem ersten Terminal (100) geeignet ist, wobei der bidirektionale Kommunikationskanal zur Verwendung durch den Netzwerkverbindungsmanager geeignet ist, um einen Kommunikations-Client (102) auf dem ersten Terminal zu aktivieren, wobei das erste Terminal einen Verbindungsmanagement-Client (104) umfasst, wobei der Netzwerkserver konfiguriert ist zum:
Assoziieren, am Netzwerkverbindungsmanager, des Verbindungsmanagement-Client mit einem registrierten Netzwerkbenutzer;
Senden, zum ersten Terminal, eines Provisionierungsdokuments, das Anmeldedaten enthält, mit denen sich der Verbindungsmanagement-Client selbst beim Netzwerkverbindungsmanager authentifizieren kann; und
Empfangen, am Netzwerkverbindungsmanager, der Anmeldedaten, die vom Verbindungsmanagement-Client gesendet werden, und Einrichten des bidirektionalen Kommunikationskanals zwischen dem Verbindungsmanagement-Client und dem Netzwerkverbindungsmanager, wobei
der SIP-Server konfiguriert ist zum:
Empfangen, von einem zweiten Terminal, einer Einladung zum Beginnen einer SIP-Sitzung mit dem ersten Terminal; und
Benachrichtigen, wenn der Kommunikations-Client nicht beim SIP-Server registriert ist, des Verbindungsmanagement-Anwendungsservers über die Einladung zum Beginnen einer SIP-Sitzung mit dem ersten Terminal; und wobei
der Verbindungsmanagement-Anwendungsserver ferner konfiguriert ist zum:
Senden einer Registrierungsanweisung über den bidirektionalen Kommunikationskanal zum Verbindungsmanagement-Client, so dass er den Kommunikations-Client zum Registrieren beim SIP-Server anweisen kann.

16. Verfahren zum Einrichten eines bidirektionalen Kommunikationskanals (125) zwischen einem ersten Terminal (100) und einem Netzwerkserver (110), wobei das erste Terminal einen Verbindungsmanagement-Client umfasst und der Netzwerkserver einen Netzwerkverbindungsmanager (120) und einen SIP-Server (140) umfasst, wobei der bidirektionale Kommunikationskanal zur Verwendung durch den Netzwerkverbindungsmanager geeignet ist, um eine Anwendung auf dem ersten Terminal zu aktivieren, wobei das Verfahren die folgenden Schritte beinhaltet:
Assoziieren, am Netzwerkverbindungsmanager, des Verbindungsmanagement-Client bei einem registrierten Netzwerkbenutzer;
Senden, zum ersten Terminal, eines Provisionierungsdokuments, das Verbindungsdaten enthält, mit denen der Verbindungsmanagement-Client sich selbst beim Netzwerkverbindungsmanager authentifizieren kann; und
Empfangen, am Netzwerkverbindungsmanager, der Anmeldedaten, die vom Verbindungsmanagement-Client übertragen werden, und Einrichten des bidirektionalen Kommunikationskanals zwischen dem Verbindungsmanagement-Client und dem Netzwerkverbindungsmanager;
Empfangen, am SIP-Server,
einer ersten Terminalfähigkeitsanforderung vom zweiten Terminal;
Benachrichtigen des Netzwerkverbindungsmanagers über die erste Terminalfähigkeitsanforderung; und
Senden einer Registrierungsanweisung über den bidirektionalen Kommunikationskanal zum Verbindungsmanagement-Client, so dass er den Kommunikations-Client zum Registrieren beim SIP-Server anweisen kann.

17. Verfahren zum Einrichten eines bidirektionalen Kommunikationskanals (125) zwischen einem ersten Terminal (100) und einem Netzwerkserver (110), wobei das erste Terminal einen Verbindungsmanagement-Client umfasst und der Netzwerkserver einen Netzwerkverbindungsmanager (120), einen Verbindungsmanagement-Anwendungsserver und einen SIP-Server (140) umfasst, wobei der bidirektionale Kommunikationskanal zur Benutzung durch den Netzwerkverbindungsmanager geeignet ist, um eine Anwendung auf dem ersten Terminal zu aktivieren, wobei das Verfahren die folgenden Schritte beinhaltet:
Assoziieren, am Netzwerkverbindungsmanager, des Verbindungsmanagement-Client mit einem registrierten Netzwerkbenutzer;
Übertragen, zum ersten Terminal, eines Provisionierungsdokuments, das Anmeldedaten umfasst, mit denen sich der Verbindungsmanagement-Client selbst beim Netzwerkverbindungsmanager authentifizieren kann;
Empfangen, am Netzwerkverbindungsmanager, der Anmeldedaten, die vom Verbindungsmanagement-Client übertragen werden, und Einrichten des bidirektionalen Kommunikationskanals zwischen dem Verbindungsmanagement-Client und dem Netzwerkverbindungsmanager;
Empfangen, am SIP-Server, einer Einladung von einem zweiten Terminal (150) zum Beginnen einer SIP-Sitzung mit dem ersten Terminal;
Benachrichtigen des Verbindungsmanagement-Anwendungsservers über die Einladung zum Beginnen einer SIP-Sitzung mit dem ersten Terminal; und
Senden einer Registrierungsanweising über den bidirektionalen Kommunikationskanal zum Verbindungsmanagement-Client, so dass er den Kommunikations-Client zum Registrieren beim SIP-Server anweisen kann.

## Revendications

1. Serveur de réseau (110) comprenant un gestionnaire de connexions de réseau (120) et un serveur SIP (140), le serveur de réseau étant adapté à l'établissement d'un canal de communications bidirectionnelles (125) entre le serveur de réseau et un premier terminal (100), le canal de communications bidirectionnelles étant adapté à une utilisation par le gestionnaire de connexions de réseau pour activer un client de communications (102) sur le premier terminal, le premier terminal comprenant un client de gestion de connexions (104), le serveur de réseau étant configuré de façon à :
associer, au niveau du gestionnaire de connexions de réseau, le client de gestion de connexions à un utilisateur de réseau enregistré ;
transmettre au premier terminal un document de provisionnement comprenant un justificatif avec lequel le client de gestion de connexions peut s'authentifier vis à vis du gestionnaire de connexions de réseau ; et
recevoir, au niveau du gestionnaire de connexions de réseau, le justificatif qui est transmis par le client de gestion de connexions, et établir le canal de communications bidirectionnelles entre le client de gestion de connexions et le gestionnaire de connexions de réseau,
cas dans lequel le serveur SIP est configuré de façon à :
recevoir, en provenance d'un deuxième terminal, au moins un des éléments suivants :
une invitation en provenance d'un deuxième terminal (150) pour commencer une session SIP avec le premier terminal ; et / ou
une requête de capacités de premier terminal ; et
si le client de communications n'est pas enregistré auprès du serveur SIP, notifier au gestionnaire de connexions de réseau l'invitation pour commencer une session SIP avec le premier terminal et / ou la requête de capacités de premier terminal ; et cas dans lequel
le gestionnaire de connexions de réseau est configuré en outre de façon à :
envoyer une instruction d'enregistrement, via le canal de communications bidirectionnelles, au client de gestion de connexions pour qu'il puisse ordonner au client de communications de s'enregistrer auprès du serveur SIP.

2. Appareil selon la revendication 1, le serveur de réseau comprenant en outre un serveur d'auto-configuration (130), le serveur de réseau étant configuré en outre de façon à :
recevoir, au niveau du serveur d'auto-configuration, une identification de client de gestion de connexions et une identification d'utilisateur de réseau enregistré ;
cas dans lequel le serveur d'auto-configuration est configuré de façon à :
ordonner au gestionnaire de connexions de réseau d'associer le client de gestion de connexions à l'utilisateur de réseau enregistré ;
recevoir le justificatif à partir du gestionnaire de connexions de réseau ; et
transmettre le document de provisionnement à l'application.

3. Appareil selon la revendication 1 ou la revendication 2, le gestionnaire de connexions de réseau étant configuré en outre de façon :
à stocker un identifiant d'association qui identifie l'association entre le client de gestion de connexions et l'utilisateur de réseau enregistré ; et
cas dans lequel le serveur de réseau est configuré en outre de façon à :
transmettre l'identifiant d'association au premier terminal ; et
transmettre le document de provisionnement au premier terminal après la réception de l'identifiant d'association en provenance du premier terminal.

4. Appareil selon la revendication 2 ou la revendication 3, le serveur de réseau étant configuré en outre de façon à recevoir, au niveau du serveur d'auto-configuration, une indication de la version du client de gestion de connexions de sorte que le serveur d'auto-configuration puisse déterminer si le client de gestion de connexions et le gestionnaire de connexions de réseau devraient être utilisés avant d'ordonner au gestionnaire de connexions de réseau d'associer le client de gestion de connexions à l'utilisateur de réseau enregistré.

5. Appareil selon l'une quelconque des revendications précédentes, le serveur de réseau comprenant en outre un serveur de capacités lequel est configuré de façon à stocker une archive de services qui sont mis à la disposition du premier terminal, et cas dans lequel :
si le serveur SIP reçoit, à partir du deuxième terminal, une requête de capacités de premier terminal alors que le client de communications n'est pas enregistré auprès du serveur SIP, le serveur SIP est configuré de façon à acheminer la requête de capacités de premier terminal au serveur de capacités, et le serveur de capacités est configuré de façon à renvoyer au serveur SIP une indication du service qui est mis à disposition du premier terminal ; et
le serveur SIP est configuré en outre de façon à acheminer au deuxième terminal l'indication du service qui est mis à la disposition du premier terminal.

6. Appareil selon l'une quelconque des revendications 1 à 4, le serveur de réseau comprenant en outre un serveur de capacités, et cas dans lequel :
si le serveur SIP reçoit, à partir du deuxième terminal, une requête de capacités de premier terminal alors que le client de communications n'est pas enregistré auprès du serveur SIP, le serveur SIP est configuré de façon à acheminer la requête de capacités de premier terminal au serveur de capacités ; et cas dans lequel
le serveur de capacités est configuré de façon à :
transporter la requête de capacités de premier terminal, via le canal de communications bidirectionnelles, au client de communications ;
recevoir à partir du client de communications, via le canal de communications bidirectionnelles, une indication au sujet du service SIP que le premier terminal prend en charge ; et
acheminer au serveur SIP l'indication au sujet du service SIP que le premier terminal prend en charge, le serveur SIP étant configuré en outre de façon à acheminer l'indication au sujet du service SIP, que le premier terminal prend en charge, au deuxième terminal.

7. Appareil selon l'une quelconque des revendications 1 à 4, le serveur de réseau étant configuré en outre de façon à recevoir au niveau du gestionnaire de connexions de réseau une indication, au sujet de la technologie d'accès grâce à laquelle le premier terminal accède au réseau, qui est transmise par le client de gestion de connexions.

8. Appareil selon la revendication 7, le serveur SIP étant configuré en outre de façon à :
si le deuxième terminal transmet une requête de capacités de premier terminal au serveur SIP, transmettre au deuxième terminal une indication au sujet du service que le premier utilisateur prend en charge sur la base de la technologie d'accès grâce à laquelle le premier terminal accède au réseau, qui est récupérée à partir du gestionnaire de connexions de réseau.

9. Appareil selon une quelconque revendication précédente, le serveur de réseau étant configuré en outre de façon à :
enregistrer le nombre de requêtes de capacités de premier terminal transmises par le deuxième terminal qui sont suivies d'une invitation, en provenance du deuxième terminal, pour commencer une session SIP avec le premier terminal ; et
envoyer l'instruction d'enregistrement uniquement lorsque le pourcentage de requêtes de capacités de premier terminal, qui sont suivies d'une invitation pour commencer une session SIP avec le premier terminal, dépasse un certain seuil.

10. Appareil selon une quelconque revendication précédente, le gestionnaire de connexions de réseau étant configuré en outre de façon à limiter le nombre total cumulé d'instructions d'enregistrement, envoyé par le gestionnaire de connexions de réseau pendant une certaine période de temps, à un nombre situé sous une certaine valeur seuil.

11. Appareil selon l'une quelconque des revendications précédentes, le gestionnaire de connexions de réseau étant configuré en outre de façon à transmettre l'instruction d'enregistrement uniquement lorsque le nombre de requêtes de capacités transmis par le deuxième terminal, dans les limites d'une période de temps, se situe sous une certaine valeur seuil.

12. Appareil selon une quelconque revendication précédente, le serveur de réseau étant configuré en outre de façon à :
établir une pluralité de canaux de communications bidirectionnelles entre le client de gestion de connexions et le gestionnaire de connexions de réseau ;
transmettre au premier terminal, à un premier intervalle, une première requête périodique de maintien à l'état actif pour maintenir à l'état actif un premier canal de communications bidirectionnelles entre le client de gestion de connexions et le gestionnaire de connexions de réseau ; et
transmettre au premier terminal, à un deuxième intervalle, une deuxième requête périodique de maintien à l'état actif pour maintenir à l'état actif un deuxième canal de communications bidirectionnelles entre le client de gestion de connexions et le gestionnaire de connexions de réseau ; cas dans lequel
le premier intervalle est plus court que le deuxième intervalle.

13. Appareil selon la revendication 12, le serveur de réseau étant configuré en outre de façon à :
recevoir, au niveau du gestionnaire de connexions de réseau, une indication au sujet de la technologie d'accès et une indication au sujet du support d'accès, cas dans lequel l'indication au sujet de la technologie d'accès indique la technologie grâce à laquelle le premier terminal accède au réseau, et l'indication au sujet du support d'accès indique le support grâce auquel le premier terminal accède au réseau, et cas dans lequel :
le premier intervalle est la dernière valeur de temporisation valide optimisée du maintien à l'état actif du canal de communications bidirectionnelles pour la technologie d'accès et le support d'accès.

14. Appareil selon une quelconque revendication précédente, le serveur de réseau étant configuré en outre de façon à :
transmettre une première requête périodique de maintien à l'état actif au premier terminal afin de maintenir à l'état actif le canal de communications bidirectionnelles entre le client de gestion de connexions et le gestionnaire de connexions de réseau ;
cas dans lequel la première requête périodique de maintien à l'état actif est transmise à des moments différents en vue d'une transmission par le serveur de réseau d'une deuxième requête périodique de maintien à l'état actif pour maintenir à l'état actif un deuxième canal de communications bidirectionnelles.

15. Serveur de réseau (110) comprenant un gestionnaire de connexions de réseau (120), un serveur d'applications de gestion de connexions et un serveur SIP (140), le serveur de réseau étant adapté à l'établissement d'un canal de communications bidirectionnelles (125) entre le serveur de réseau et un premier terminal (100), le canal de communications bidirectionnelles étant adapté à une utilisation par le gestionnaire de connexions de réseau pour activer un client de communications (102) sur le premier terminal, le premier terminal comprenant un client de gestion de connexions (104), le serveur de réseau étant configuré de façon à :
associer, au niveau du gestionnaire de connexions de réseau, le client de gestion de connexions à un utilisateur de réseau enregistré ;
transmettre au premier terminal un document de provisionnement comprenant un justificatif avec lequel le client de gestion de connexions peut s'authentifier vis à vis du gestionnaire de connexions de réseau ; et
recevoir, au niveau du gestionnaire de connexions de réseau, le justificatif qui est transmis par le client de gestion de connexions, et établir le canal de communications bidirectionnelles entre le client de gestion de connexions et le gestionnaire de connexions de réseau, cas dans lequel
le serveur SIP est configuré de façon à :
recevoir à partir d'un deuxième terminal une invitation pour commencer une session SIP avec le premier terminal ; et
si le client de communications n'est pas enregistré auprès du serveur SIP, notifier au serveur d'applications de gestion de connexions l'invitation pour commencer une session SIP avec le premier terminal ; et cas dans lequel le serveur d'applications de gestion de connexions est configuré en outre de façon à :
envoyer une instruction d'enregistrement, via le canal de communications bidirectionnelles, au client de gestion de connexions pour qu'il puisse ordonner au client de communications de s'enregistrer auprès du serveur SIP.

16. Procédé d'établissement d'un canal de communications bidirectionnelles (125) entre un premier terminal (100) et un serveur de réseau (110), le premier terminal comprenant un client de gestion de connexions, et le serveur de réseau comprenant un gestionnaire de connexions de réseau (120) et un serveur SIP (140), le canal de communications bidirectionnelles étant adapté à une utilisation par le gestionnaire de connexions de réseau pour activer une application sur le premier terminal, le procédé comprenant les étapes consistant à :
associer, au niveau du gestionnaire de connexions de réseau, le client de gestion de connexions à un utilisateur de réseau enregistré ;
transmettre au premier terminal un document de provisionnement comprenant un justificatif avec lequel le client de gestion de connexions peut s'authentifier vis à vis du gestionnaire de connexions de réseau ;
recevoir, au niveau du gestionnaire de connexions de réseau, le justificatif qui est transmis par le client de gestion de connexions, et établir le canal de communications bidirectionnelles entre le client de gestion de connexions et le gestionnaire de connexions de réseau ;
recevoir au niveau du serveur SIP
une requête de capacités de premier terminal en provenance du deuxième terminal ;
notifier au gestionnaire de connexions de réseau la requête de capacités de premier terminal ; et
envoyer une instruction d'enregistrement, via le canal de communications bidirectionnelles, au client de gestion de connexions pour qu'il puisse ordonner au client de communications de s'enregistrer auprès du serveur SIP.

17. Procédé d'établissement d'un canal de communications bidirectionnelles (125) entre un premier terminal (100) et un serveur de réseau (110), le premier terminal comprenant un client de gestion de connexions, et le serveur de réseau comprenant un gestionnaire de connexions de réseau (120), un serveur d'applications de gestion de connexions et un serveur SIP (140), le canal de communications bidirectionnelles étant adapté à une utilisation par le gestionnaire de connexions de réseau pour activer une application sur le premier terminal, le procédé comprenant les étapes consistant à :
associer, au niveau du gestionnaire de connexions de réseau, le client de gestion de connexions à un utilisateur de réseau enregistré ;
transmettre au premier terminal un document de provisionnement comprenant un justificatif avec lequel le client de gestion de connexions peut s'authentifier vis à vis du gestionnaire de connexions de réseau ;
recevoir, au niveau du gestionnaire de connexions de réseau, le justificatif qui est transmis par le client de gestion de connexions, et établir le canal de communications bidirectionnelles entre le client de gestion de connexions et le gestionnaire de connexions de réseau ;
recevoir, au niveau du serveur SIP, une invitation en provenance d'un deuxième terminal (150) pour commencer une session SIP avec le premier terminal ;
notifier au serveur d'applications de gestion de connexions l'invitation pour commencer une session SIP avec le premier terminal ; et
envoyer une instruction d'enregistrement, via le canal de communications bidirectionnelles, au client de gestion de connexions pour qu'il puisse ordonner au client de communications de s'enregistrer auprès du serveur SIP.
